# EUROPÄISCHE PATENTSCHRIFT

(11) **EP 4 259 500 B1**
(45) Veröffentlichungstag und Bekanntmachung des Hinweises auf die Patenterteilung: **16.09.2026**
(21) Anmeldenummer: 21806988.8
(22) Anmeldetag: 04.11.2021
(51) Int. Cl.: B60T 13/74

(54) **VERFAHREN ZUM HALTEN EINES KRAFTFAHRZEUGS UND ELEKTRISCH BETÄTIGTE BREMSE**
METHOD FOR HOLDING A MOTOR VEHICLE IN PLACE AND ELECTRICALLY ACTUATED BRAKE
PROCÉDÉ DE MAINTIEN D'UN VÉHICULE AUTOMOBILE EN PLACE ET FREIN ÉLECTRIQUE

(30) Priorität: 14.12.2020 DE 102020215854
(43) Veröffentlichungstag der Anmeldung: 18.10.2023
(73) Patentinhaber: AUMOVIO Germany GmbH, 60488 Frankfurt am Main (DE)
(72) Erfinder: BÖHM, Jürgen, 60488 Frankfurt am Main (DE)
(74) Vertreter: Aumovio Corporation
(86) Internationale Anmeldenummer: PCT/DE2021/200175
(87) Internationale Veröffentlichungsnummer: WO 2022/128005

(56) Entgegenhaltungen:
- EP-A2- 3 118 076
- DE-A1- 102016 220 752

## Beschreibung

Die Erfindung betrifft ein Verfahren zum Halten eines Kraftfahrzeugs mittels einer elektrisch betätigten Bremse sowie eine zugehörige elektrisch betätigte Bremse.

Elektrisch betätigte Bremsen können beispielsweise eingesetzt werden, um ein trockenes Bremssystem zu realisieren, d.h. ein Bremssystem für ein Kraftfahrzeug, in welchem auf eine Hydraulik verzichtet werden kann. Ein hydraulisches Bremssystem ist beispielsweise in dem Dokument DE 10 2016 220 752 A1 der Anmelderin beschrieben. In diesem Dokument wird ein Verfahren zum Betreiben eines Bremssystems mit Radbremsen beschrieben, welches über eine elektrohydraulische Druckbereitstellungseinrichtung zum Bremsdruckaufbau in den Radbremsen verfügt und wobei mit Hilfe eines Elektromotors ein Druckkolben in einen hydraulischen Druckraum verschiebbar ist. Zur Regelung eines Bremsdruckes ist ein Druckregelsystem vorgesehen.

Die elektrisch betätigte Bremse erhält dabei ein elektrisches Signal und/oder eine geeignete Leistungsversorgung und erzeugt auf Anforderung eine Spannkraft, aus welcher eine Bremskraft resultiert. Eine solche elektrisch betätigte Bremse wird als Scheibenbremse oder als Trommelbremse ausgeführt.

Es ist grundsätzlich bekannt, dass ein Motordrehmoment eines elektrischen Aktuators einer elektrisch betätigten Bremse mittels eines Aktuatorgeschwindigkeitsreglers in Abhängigkeit von einer Differenz zwischen einer Soll-Winkelgeschwindigkeit und einer Ist-Winkelgeschwindigkeit geregelt wird. Die Soll-Winkelgeschwindigkeit kann dabei insbesondere aus einem Kraftregler stammen, welcher eine Ist-Spannkraft auf eine Soll-Spannkraft einregelt. Alternativ zur Verwendung eines Kraftreglers kann beispielsweise auch ein Positionsregler verwendet werden, welcher eine Ist-Position auf eine Soll-Position einregelt.

Es ist eine Aufgabe der Erfindung, ein Verfahren zum Halten eines Kraftfahrzeugs mittels einer elektrisch betätigten Bremse bereitzustellen, welches im Vergleich zu bekannten Ausführungen alternativ oder besser ausgeführt ist. Es ist des Weiteren eine Aufgabe der Erfindung, eine zugehörige elektrisch betätigte Bremse bereitzustellen. Dies wird erfindungsgemäß durch ein Verfahren und eine elektrisch betätigte Bremse gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Halten eines Kraftfahrzeugs mittels einer elektrisch betätigten Bremse. Die Bremse weist einen elektrischen Aktuator auf. Dessen Motordrehmoment wird mittels eines Aktuatorgeschwindigkeitsreglers in Abhängigkeit von einer Differenz zwischen einer Soll-Winkelgeschwindigkeit und einer Ist-Winkelgeschwindigkeit bestimmt. Das Verfahren weist folgende Schritte auf:
- Zuspannen der Bremse, bis eine Zielkraft erreicht ist,
- Anlegen eines negativen Vorgabewerts für die Soll-Winkelgeschwindigkeit, dabei Überwachen der Ist-Winkelgeschwindigkeit des Aktuators,
- sobald die Ist-Winkelgeschwindigkeit betragsmäßig einen Schwellenwert übersteigt, Anlegen eines Ruhewerts für die Soll-Winkelgeschwindigkeit.

Mittels eines solchen Verfahrens kann eine Haltefunktion für ein Kraftfahrzeug mittels einer elektrisch betätigten Bremse implementiert werden, welche besonders wenig Energie verbraucht und einen besonders geringen Materialverschleiß hat.

Durch das Anlegen eines negativen Vorgabewerts für die Soll-Winkelgeschwindigkeit wird das Motordrehmoment für eine Haltefunktion so weit reduziert, dass es gerade noch für diesen Zweck ausreicht.

Das Motordrehmoment, welches mittels des Aktuatorgeschwindigkeitsreglers bestimmt wird, ist insbesondere ein einzustellendes Motordrehmoment. Dieses wird dann beispielsweise durch einen weiteren Regler eingeregelt. Es kann auch als Soll-Motodrehmoment betrachtet werden. Insbesondere kann zu jedem Motordrehmoment eine Soll-Stromstärke berechnet werden oder aus einer Tabelle ausgelesen werden, wobei die Soll-Stromstärke dann von einem Stromregler eingeregelt wird.

Bei der elektrisch betätigten Bremse handelt es sich um eine Scheibenbremse oder um eine Trommelbremse.

Ein elektrischer Aktuator weist typischerweise einen Elektromotor auf, welcher ein Motordrehmoment erzeugt. Die Zielkraft ist typischerweise eine Kraft, welche so vorgegeben wird, dass die Bremse zuverlässig zuspannt, um eine Haltefunktion auszuführen. Diese Zielkraft zum Halten ist typischerweise konstant. Alternativ könnten auch andere Abbruchkriterien verwendet werden. Die Winkelgeschwindigkeit ist nach dem Zuspannen typischerweise zunächst null. Wenn der negative Vorgabewert nach einer bestimmten Zeit dazu führt, dass sich der Aktuator doch wieder dreht, so wird die Winkelgeschwindigkeit betragsmäßig größer null. Dies kann durch einen einfachen Sensor detektiert werden. Übersteigt die Winkelgeschwindigkeit einen vorgegebenen Schwellenwert, welcher beispielsweise auch null sein kann, so wird der Ruhewert angelegt und die Bremse hält das Fahrzeug bei minimal verbleibendem Motordrehmoment.

Der Aktuatorgeschwindigkeitsregler hat vorzugsweise mindestens einen Integralteil. Dies führt dazu, dass nach Einstellen der für die Haltefunktion vorgegebenen Zielkraft durch Anlegen eines negativen Vorgabewerts für die Soll-Winkelgeschwindigkeit das Motordrehmoment kontinuierlich weiter abgesenkt wird, bis sich der Aktuator zumindest geringfügig in Bewegung setzt. Insbesondere kann der Aktuatorgeschwindigkeitsregler ein Proportional-Integral-Regler sein. Er kann insbesondere eine Winkelgeschwindigkeit des Aktuators regeln. Proportional-Integral-Regler haben sich für typische Anwendungen als vorteilhaft herausgestellt. Auch ein zusätzlicher Differentialteil kann verwendet werden.

Der Vorgabewert kann beispielsweise betragsmäßig höchstens eine Umdrehung pro Minute betragen. Dies hat sich für typische Anwendungen als sinnvoll herausgestellt. Auch andere Werte sind hier jedoch möglich. Dass der Vorgabewert negativ ist bedeutet insbesondere, dass er ein negatives Vorzeichen hat.

Der Ruhewert kann insbesondere null betragen. In diesem Fall erfolgt keine Veränderung der Eingangsgröße des Aktuatorgeschwindigkeitsreglers mehr, wenn die Winkelgeschwindigkeit des Aktuators ebenfalls wieder null beträgt. Dies kann beispielsweise aufgrund von Reibung der Fall sein. Der Aktuatorgeschwindigkeitsregler erhält bevorzugt eine Differenz aus der Soll-Winkelgeschwindigkeit und der Ist-Winkelgeschwindigkeit als Eingangsgröße.

Die Soll-Winkelgeschwindigkeit kann insbesondere abhängig von einem Betriebszustand der Vorgabewert sein oder aus einem Kraftregler stammen. Die Soll-Winkelgeschwindigkeit kann auch abhängig von einem Betriebszustand der Vorgabewert sein oder aus einem Positionsregler stammen. Insbesondere kann vorgesehen sein, dass die Soll-Winkelgeschwindigkeit abhängig von einem Betriebszustand der Vorgabewert ist, aus einem Kraftregler stammt oder aus einem Positionsregler stammt. In diesem Fall können drei unterschiedliche Werte als Eingang für den Aktuatorgeschwindigkeitsregler verwendet werden. Der Betriebszustand kann dabei auswählen, welcher Wert verwendet werden soll. Beispielsweise kann ein Kraftregler verwendet werden, wenn eine Soll-Spannkraft vorgegeben werden soll. Ein Positionsregler kann verwendet werden, wenn eine Soll-Position vorgegeben oder eingestellt werden soll. Der Vorgabewert kann verwendet werden, wenn die hierin beschriebene Funktionalität einer Verringerung des Motordrehmoments zum Halten des Kraftfahrzeugs umgesetzt werden soll.

Der Kraftregler und/oder der Positionsregler können insbesondere ein jeweiliger proportional wirkender Regler sein. Dies hat sich für typische Anwendungen als vorteilhaft herausgestellt.

Ausgangsseitig zum Aktuatorgeschwindigkeitsregler kann insbesondere ein Begrenzer das Motordrehmoment derart begrenzen, dass es mindestens einen unteren Wert aufweist und/oder höchstens einen oberen Wert aufweist. Dadurch kann ein zu verwendendes Motordrehmoment in einem sinnvollen Bereich gehalten werden, welcher durch den unteren Wert und den oberen Wert vorgegeben werden kann. Untypische oder nicht zu verwendende Werte können auf diese Weise vermieden werden.

Eingangsseitig zum Aktuatorgeschwindigkeitsregler kann insbesondere ein Begrenzer die Soll-Winkelgeschwindigkeit derart begrenzen, dass sie mindestens einen unteren Wert aufweist und/oder höchstens einen oberen Wert aufweist. Auch dadurch können untypische Werte vermieden werden. Dieser Begrenzer kann insbesondere zwischen einem Kraftregler und dem Aktuatorgeschwindigkeitsregler und/oder zwischen einem Positionsregler und dem Aktuatorgeschwindigkeitsregler angeordnet sein.

Das Halten kann beispielsweise beendet werden, wenn eine Soll-Spannkraft oder eine Soll-Aktuatorposition verändert wird. Dadurch kann beispielsweise wieder eine Kraftregelung oder eine Positionsregelung aktiviert werden und der Ruhewert wird nicht mehr verwendet. Beispielsweise können entsprechende Eingangsgrößen für die Soll-Spannkraft und/oder die Soll-Aktuatorposition überwacht werden, so dass deren Änderung erkannt werden kann.

Das hierin beschriebene Verfahren kann insbesondere ansprechend darauf ausgeführt werden, dass mindestens für einen vorbestimmten Zeitraum eine Ist-Spannkraft größer als ein Aktivierungsschwellenwert ist, höchstens um einen vorgegebenen Schwellenwert von einer Soll-Spannkraft abweicht und innerhalb eines Toleranzbereichs liegt. Dadurch kann ein stationärer Zustand erkannt werden, welcher die Durchführung des hierin beschriebenen Verfahrens zur Verringerung der Materialbeanspruchung und zur Reduzierung der elektrischen Leistungsaufnahme des Aktuators sinnvoll erscheinen lässt. Durch die Verwendung eines Aktivierungsschwellenwerts kann ausgeschlossen werden, dass das Verfahren ausgeführt wird, wenn das Fahrzeug längere Zeit ohne zu bremsen fortbewegt wird.

Das Verfahren kann auch ansprechend darauf ausgeführt werden, dass mindestens für einen vorbestimmten Zeitraum eine Ist-Position einen weiteren Aktivierungsschwellenwert übersteigt, höchstens um einen vorgegebenen Schwellenwert von einer Soll-Position abweicht und innerhalb eines Toleranzbereichs konstant ist. Auch dadurch kann entsprechend ein stationärer Zustand erkannt werden.

Darunter, dass das Verfahren ansprechend auf einen bestimmten Zustand ausgeführt wird, kann insbesondere verstanden werden, dass die Bremse wie erwähnt zugespannt wird, dann der Vorgabewert angelegt wird und nach Überschreiten des Schwellenwerts durch die Winkelgeschwindigkeit der Ruhewert angelegt wird.

Die Erfindung betrifft des Weiteren eine elektrisch betätigte Bremse, welche dazu konfiguriert ist, ein Verfahren wie hierin beschrieben auszuführen. Bezüglich des Verfahrens kann auf alle hierin beschriebenen Ausführungen und Varianten zurückgegriffen werden. Erläuterte Vorteile gelten entsprechend.

Eine erfindungsgemäße elektrisch betätigte Kraftfahrzeugbremse weist einen oder mehrere Bremsbacken und eine Bremsscheibe oder eine Bremstrommel auf. Sie weist ferner einen Aktuator auf, welcher zu seinem Antrieb einen Elektromotor aufweist und welcher dazu ausgebildet ist, die Bremsbacken gegen die Bremsscheibe oder gegen die Bremstrommel zu drücken. Des Weiteren kann die Kraftfahrzeugbremse typischerweise zumindest einen Spannkraftsensor und/oder einen Winkelsensor aufweisen. Sie weist ferner eine elektronische Steuerungsvorrichtung auf, welche dazu konfiguriert ist, ein erfindungsgemäßes Verfahren auszuführen.

Weitere Merkmale und Vorteile wird der Fachmann dem nachfolgend mit Bezug auf die beigefügte Zeichnung beschriebenen Ausführungsbeispiel entnehmen. Dabei zeigt:

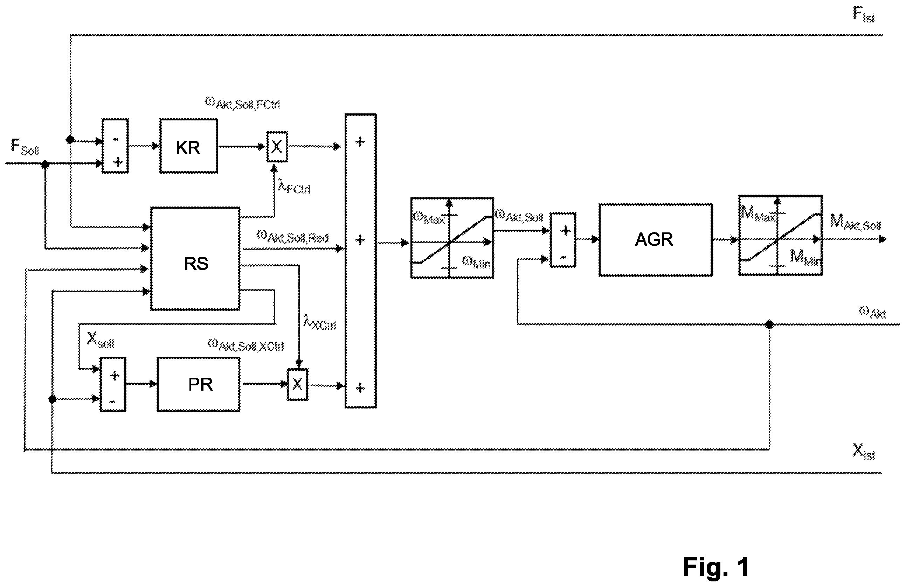

- Fig. 1:: eine Regelung für einen Aktuator.

Fig. 1 zeigt eine Regelung für einen Aktuator einer elektrisch betätigten Bremse. Eingangsseitig sind dabei zunächst ein Kraftregler KR und ein Positionsregler PR vorhanden. Der Kraftregler KR erhält als Eingangsgröße wie gezeigt eine Differenz zwischen einer Soll-Spannkraft F_{Soll} und einer Ist-Spannkraft F_{Ist}, wobei erstere vorgegeben wird und letztere gemessen und eingestellt wird. Als Spannkraft kann beispielsweise hier die Kraft betrachtet werden, mit der die Beläge an eine Bremsscheibe oder an eine Bremstrommel gedrückt werden. In ähnlicher Weise erhält der Positionsregler PR als Eingang eine Differenz aus einer Soll-Aktuatorposition X_{Soll} und einer Ist-Aktuatorposition X_{Ist}.

Der Kraftregler KR erzeugt als Ausgang eine Soll-Winkelgeschwindigkeit ω_{Akt,Soll,FCtrl}, welche in einem Multiplizierer mit einem ersten Steuerungssignal λ_{FCtrl} multipliziert wird. Das Ausgangssignal dieses Multiplizierers geht wiederum in einen Addierer ein. In ähnlicher Weise erzeugt der Positionsregler PR als Ausgangssignal eine Soll-Winkelgeschwindigkeit ω_{Akt,Soll,XCtrl}, welche wiederum in einen Multiplizierer geht und dort mit einem weiteren Steuerungssignal λ_{XCtrl} multipliziert wird. Das Ausgangssignal des Multiplizierers geht in den gleichen Addierer ein.

Zur Steuerung des Reglers ist eine Reglerselektion RS vorhanden. Diese kann wie gezeigt die beiden Steuerungswerte λ_{FCtrl}, λ_{XCtrl} erzeugen. Des Weiteren erzeugt sie bei Bedarf einen Vorgabewert ω_{Akt,Soll,Red}, welcher ebenfalls in den bereits erwähnten Addierer eingeht. Die Reglerselektion RS erhält als Eingangsgrößen die Soll-Spannkraft F_{Soll}, die Ist-Spannkraft F_{Ist}, die Ist-Aktuatorposition X_{Ist} und eine Ist-Winkelgeschwindigkeit ω_{Akt}, wobei letztere mittels eines geeigneten Sensors gemessen wird oder durch Differentiation der Ist-Aktuatorposition X_{Ist} des Aktuators bestimmt wird. Sie erzeugt ebenfalls die bereits weiter oben erwähnte Soll-Aktuatorposition X_{Soll}. Die Reglerselektion RS kann je nach Betriebszustand anhand ihrer Eingangsgrößen auswählen, ob ein Ausgangssignal des Kraftreglers KR oder des Positionsreglers PR verwendet werden soll, oder ob der Vorgabewert ω_{Akt,Soll,Red} verwendet werden soll.

Im normalen Fahrbetrieb wird typischerweise die Soll-Spannkraft F_{Soll} von einem Fahrer oder einer Fahrzeugsteuerung vorgegeben und von der Reglerselektion RS ausgewertet. Zur Umsetzung einer normalen Bremskraftanforderung wird typischerweise der Kraftregler KR verwendet. Das erste Steuerungssignal λ_{FCtrl} wird dementsprechend auf eins gesetzt, das zweite Steuerungssignal λ_{XCtrl} und der Vorgabewert ω_{Akt,Soll,Red} werden auf null gesetzt. Lediglich der Kraftregler KR ist somit relevant. Sein Ausgangssignal wird über den bereits erwähnten Addierer zu einem Begrenzer geleitet, welcher dafür sorgt, dass die erzeugte Soll-Winkelgeschwindigkeit ω_{Akt,Soll,FCtrl} nicht kleiner als ein unterer Wert ω_{Min} und nicht größer als ein oberer Wert ω_{Max} ist. Es wird also ein Intervall vorgegeben, in welchem sich entsprechende Vorgaben vernünftig weiterverarbeiten lassen. Das Ausgangssignal dieses Begrenzers wird dann als Soll-Winkelgeschwindigkeit ω_{Akt,Soll} einem weiteren Subtrahierer zugeführt, d.h. es wird davon die bereits weiter oben erwähnte Ist-Winkelgeschwindigkeit ω_{Akt} abgezogen. Das Ausgangssignal dieses Subtrahierers wird dann einem Aktuatorgeschwindigkeitsregler AGR zugeführt, welcher vorliegend ein Proportional-Integral-Regler ist und dessen Ausgangssignal nach Durchgang durch einen weiteren Begrenzer, welcher das Ausgangssignal zwischen einem unteren Wert M_{Min} und einem oberen Wert M_{Max} einschränkt, als Soll-Motordrehmoment M_{Akt,Soll} verwendet wird. Der Aktuator erzeugt bei korrekter Verwendung dieses Soll-Motordrehmoments M_{Akt,Soll} das gewünschte Drehmoment, welches letztlich zur Einstellung der gewünschten Soll-Spannkraft F_{Soll} führt.

Erkennt hingegen die Reglerselektion RS, dass der Bremsvorgang beendet ist, so kann das erste Steuerungssignal λ_{FCtrl} auf null gesetzt werden und das zweite Steuerungssignal λ_{XCtrl} kann auf eins gesetzt werden. Dementsprechend wird der Kraftregler KR deaktiviert und der Positionsregler PR wird aktiviert. Die Soll-Aktuatorposition wird auf einen Wert gesetzt, welcher angefahren werden soll, wobei es sich beispielsweise um eine Ruheposition handeln kann, in welcher kein Kontakt mehr zwischen einem Bremsbacken und einer Bremsscheibe oder einer Bremstrommel besteht. Der Positionsregler PR erzeugt dann eine hierfür geeignete Soll-Winkelgeschwindigkeit ω_{Akt,Soll,XCtrl}, welche ebenso wie mit Bezug auf den Kraftregler erwähnt über den Addierer und den Begrenzer zum Subtrahierer vor dem Aktuatorgeschwindigkeitsregler AGR weitergeleitet wird und zu einem Soll-Motordrehmoment M_{Akt,Soll} führt, welches letztlich zur Einstellung der gewünschten Soll-Aktuatorposition X_{Soll} führen wird. In diesem Fall ist die Aktuatorposition typischerweise so festgelegt, dass kein Kontakt zwischen Belag und Bremsscheibe oder Bremstrommel besteht und ein bestimmter Abstand zwischen Bremsbelag und Bremsscheibe eingestellt wird.

Verbleibt die Soll-Spannkraft F_{Soll} für einen längeren Zeitraum auf einem Wert, welcher einen Aktivierungsschwellenwert übersteigt, und ist die Ist-Spannkraft F_{Ist} für diesen Zeitraum ebenfalls zumindest weitgehend konstant und kaum von der Soll-Spannkraft F_{Soll} verschieden, beispielsweise nur innerhalb eines bestimmten Intervalls verschieden, so erkennt die Reglerselektion RS, dass eine Haltefunktion vorliegt. In diesem Fall setzt sie beide Steuerungssignale λ_{FCtrl}, λ_{XCtrl} auf null, so dass sowohl der Kraftregler KR wie auch der Positionsregler PR deaktiviert werden. Für den Vorgabewert ω_{Akt,Soll,Red} wird ein geringer negativer Wert ausgegeben, welcher über den Addierer wie bereits weiter oben beschrieben zum Aktuatorgeschwindigkeitsregler AGR weitergeleitet wird. Der Integralanteil im Aktuatorgeschwindigkeitsregler AGR wird dabei sukzessive verringert, wobei sich ein Soll-Motordrehmoment M_{Akt,Soll} einstellt, welches letztlich auf eine zumindest geringfügige Lösung der zugespannten Bremse gerichtet ist. Während der geringfügig negative Vorgabewert ω_{Akt,Soll,Red} anliegt, wird die Ist-Winkelgeschwindigkeit ω_{Akt} überwacht. Übersteigt diese betragsmäßig einen Schwellenwert, so wird der Vorgabewert ω_{Akt,Soll,Red} wieder auf einen Ruhewert von null gesetzt und die Lösung der Bremse wird somit zum Stillstand gebracht. Aufgrund von Reibung greift die Bremse wieder und hält das Fahrzeug im Stehen, wobei durch die eben beschriebene Maßnahme des Anlegens eines negativen Vorgabewerts ω_{Akt,Soll,Red} das anliegende Motordrehmoment auf einen Wert verringert wird, welcher gerade noch zum Halten des Fahrzeugs ausreicht, wodurch die Materialbeanspruchung verringert wird. Sollte es zu einer Erhöhung der betragsmäßigen Ist-Winkelgeschwindigkeit ω_{Akt} kommen, was beispielsweise bei einer Beladung des Kraftfahrzeugs erfolgen kann, kann beispielsweise der Kraftregler KR durch Setzen des ersten Steuerungssignals λ_{FCtrl} auf eins wieder aktiviert werden, und die Bremse kann wieder eine höhere Spannkraft erzeugen. Dadurch kann ein unerwünschtes Wegrollen des Fahrzeugs verhindert werden.

Stellt die Reglerselektion RS fest, dass die Soll-Spannkraft F_{Soll} verändert wird, insbesondere mehr als einen vorgegebenen Schwellenwert verändert wird, so wird die Haltephase beendet und der Kraftregler KR wird durch Setzen des ersten Steuerungssignals λ_{FCtrl} auf eins wieder aktiviert. Anschließend kann die Kraftregelung wieder in üblicher Weise ausgeführt werden.

Es versteht sich, dass zahlreiche Änderungen sowie Abwandlungen möglich sind, ohne dass dadurch der durch die Patentansprüche definierte Schutzbereich verlassen wird.

### Bezugszeichenliste:

- F_{Soll}:: Soll-Spannkraft
- F_{Ist}:: Ist-Spannkraft
- X_{Soll}:: Soll-Aktuatorposition
- X_{Ist}:: Ist-Aktuatorposition
- ω_{Akt,Soll,FCtrl}:: Soll-Winkelgeschwindigkeit
- λ_{FCtrl}:: erstes Steuerungssignal
- ω_{Akt,Soll,XCtrl}:: Soll-Winkelgeschwindigkeit
- λ_{XCtrl}:: zweites Steuerungssignal
- ω_{Akt,Soll}:: Soll-Winkelgeschwindigkeit
- ω_{Akt,Soll,Red}:: Vorgabewert
- ω_{Min}:: unterer Wert
- ω_{Max}:: oberer Wert
- M_{Akt,Soll}:: Soll-Motordrehmoment
- M_{Min}:: unterer Wert
- M_{Max}:: oberer Wert
- RS:: Reglerselektion
- KR:: Kraftregler
- PR:: Positionsregler
- AGR:: Aktuatorgeschwindigkeitsregler

## Patentansprüche

1. Verfahren zum Halten eines Kraftfahrzeugs mittels einer elektrisch betätigten Bremse,
wobei die Bremse einen elektrischen Aktuator aufweist, dessen Motordrehmoment (M_{Akt,Soll}) mittels eines Aktuatorgeschwindigkeitsreglers (AGR) in Abhängigkeit von einer Differenz zwischen einer Soll-Winkelgeschwindigkeit (ω_{Akt,Soll}) und einer Ist-Winkelgeschwindigkeit (ω_{Akt,Ist}) bestimmt wird, umfassend einen Elektromotor, welcher dazu ausgebildet ist, die Bremsbacken gegen die Bremsscheibe oder gegen die Bremstrommel der Bremse zu drücken,
wobei das Verfahren folgende Schritte aufweist:
- Zuspannen der Bremse, bis eine Zielkraft erreicht ist,
- Anlegen eines negativen Vorgabewerts (ω_{Akt,Soll,Red}) für die Soll-Winkelgeschwindigkeit (ω_{Akt,Soll}), dabei Überwachen der Ist-Winkelgeschwindigkeit (ω_{Akt}) des Aktuators,
- sobald die Ist-Winkelgeschwindigkeit (ω_{Akt}) betragsmäßig einen Schwellenwert übersteigt, Anlegen eines Ruhewerts für die Soll-Winkelgeschwindigkeit (ω_{Akt,Soll}).

2. Verfahren nach Anspruch 1,
- wobei der Aktuatorgeschwindigkeitsregler (AGR) mindestens einen Integralteil hat.

3. Verfahren nach einem der vorhergehenden Ansprüche,
- wobei der Aktuatorgeschwindigkeitsregler (AGR) ein Proportional-Integral-Regler ist.

4. Verfahren nach einem der vorhergehenden Ansprüche,
- wobei der Vorgabewert (ω_{Akt,Soll,Red}) betragsmäßig höchstens eine Umdrehung pro Minute beträgt.

5. Verfahren nach einem der vorhergehenden Ansprüche,
- wobei der Ruhewert Null beträgt.

6. Verfahren nach einem der vorhergehenden Ansprüche,
- wobei die Soll-Winkelgeschwindigkeit (ω_{Akt,Soll}) abhängig von einem Betriebszustand der Vorgabewert (ω_{Akt,Soll,Red}) ist oder aus einem Kraftregler (KR) stammt.

7. Verfahren nach einem der vorhergehenden Ansprüche,
- wobei die Soll-Winkelgeschwindigkeit (ω_{Akt,Soll}) abhängig von einem Betriebszustand der Vorgabewert (ω_{Akt,Soll,Red}) ist oder aus einem Positionsregler (PR) stammt.

8. Verfahren nach einem der vorhergehenden Ansprüche,
- wobei die Soll-Winkelgeschwindigkeit (ω_{Akt,Soll}) abhängig von einem Betriebszustand der Vorgabewert (ω_{Akt,Soll,Red}) ist, aus einem Kraftregler (KR) stammt oder aus einem Positionsregler (PR) stammt.

9. Verfahren nach einem der Ansprüche 6 bis 8,
- wobei der Kraftregler (KR) und/oder der Positionsregler (PR) ein proportionalwirkender Regler ist.

10. Verfahren nach einem der vorhergehenden Ansprüche,
- wobei ausgangsseitig zum Aktuatorgeschwindigkeitsregler (AGR) ein Begrenzer das Motordrehmoment (M_{Akt,Soll}) derart begrenzt, dass es mindestens einen unteren Wert (M_{Min}) aufweist und/oder höchsten einen oberen Wert (M_{Max}) aufweist.

11. Verfahren nach einem der vorhergehenden Ansprüche,
- wobei eingangsseitig zum Aktuatorgeschwindigkeitsregler (AGR) ein Begrenzer die Soll-Winkelgeschwindigkeit (ω_{Soll}) derart begrenzt, dass sie mindestens einen unteren Wert (ω_{Min}) aufweist und/oder höchsten einen oberen Wert (ω_{Max}) aufweist.

12. Verfahren nach einem der vorhergehenden Ansprüche,
- wobei das Halten beendet wird, wenn eine Soll-Spannkraft (F_{Soll}) oder eine Soll-Aktuatorposition (X_{Soll}) verändert wird.

13. Verfahren nach einem der vorhergehenden Ansprüche,
- welches ansprechend darauf ausgeführt wird, dass mindestens für einen vorbestimmten Zeitraum eine Ist-Spannkraft (F_{Ist}) einen Aktivierungsschwellenwert übersteigt, höchstens um einen vorgegebenen Schwellenwert von einer Soll-Spannkraft (F_{Soll}) abweicht und innerhalb eines Toleranzbereichs konstant ist,
und/oder
- welches ansprechend darauf ausgeführt wird, dass mindestens für einen vorbestimmten Zeitraum eine Ist-Position (X_{Ist}) einen weiteren Aktivierungsschwellenwert übersteigt, höchsten um einen vorgegebenen Schwellenwert von einer Soll-Position (X_{Soll}) abweicht und innerhalb eines Toleranzbereichs konstant ist.

14. Elektrisch betätigte Bremse, die eine elektronische Steuerungsvorrichtung aufweist, welche dazu konfiguriert ist, ein Verfahren nach einem der vorhergehenden Ansprüche auszuführen, wobei die Bremse einen elektrischen Aktuator aufweist, dessen Motordrehmoment (M_{Akt,Soll}) mittels eines Aktuatorgeschwindigkeitsreglers (AGR) in Abhängigkeit von einer Differenz zwischen einer Soll-Winkelgeschwindigkeit (ω_{Akt,Soll}) und einer Ist-Winkelgeschwindigkeit (ω_{Akt,Ist}) bestimmt wird, umfassend ferner einen Elektromotor, welcher dazu ausgebildet ist, die Bremsbacken gegen die Bremsscheibe oder gegen die Bremstrommel der Bremse zu drücken.

## Claims

1. A method for holding a motor vehicle by means of an electrically actuated brake,
wherein the brake has an electric actuator, the motor torque (M_{Act,Target}) of which is determined by means of an actuator speed controller (AGR) depending on a difference between a target angular velocity (ω_{Act,Target}) and an actual angular velocity (ω_{Act,Actual}), comprising an electric motor designed to press the brake shoes against the brake disc or against the brake drum of the brake,
wherein the method comprises the following steps:
- applying the brake until a target force is reached,
- applying a negative preset value (ω_{Act,Target,Red}) for the target angular velocity (ω_{Act,Target}), while monitoring the actual angular velocity (ω_{Act}) of the actuator,
- applying an idle value for the target angular velocity (ω_{Act,Target}) as soon as the actual angular velocity (ω_{Act}), in terms of absolute value, exceeds a threshold value.

2. The method as claimed in claim 1,
- wherein the actuator speed controller (AGR) has at least one integral part.

3. The method as claimed in any one of the preceding claims,
- wherein the actuator speed controller (AGR) is a proportional-integral controller.

4. The method as claimed in any one of the preceding claims,
- wherein the preset value (ω_{Act,Target,Red}), in terms of absolute value, is at most one revolution per minute.

5. The method as claimed in any one of the preceding claims,
- wherein the idle value is zero.

6. The method as claimed in any one of the preceding claims,
- wherein the target angular velocity (ω_{Act,Target}), depending on an operating state, is the preset value (ω_{Act,Target,Red}) or originates from a force controller (KR).

7. The method as claimed in any one of the preceding claims,
- wherein the target angular velocity (ω_{Act,Target}), depending on an operating state, is the preset value (ω_{Act,Target,Red}) or originates from a position controller (PR).

8. The method as claimed in any one of the preceding claims,
- wherein the target angular velocity (ω_{Act,Target}), depending on an operating state, is the preset value (ω_{Act,Target,Red}), originates from a force controller (KR) or originates from a position controller (PR).

9. The method as claimed in any one of claims 6 to 8,
- wherein the force controller (KR) and/or the position controller (PR) are/is a proportionally-acting controller.

10. The method as claimed in any one of the preceding claims,
- wherein, on the output side of the actuator speed controller (AGR), a limiter limits the motor torque (M_{Act,Target}) in such a way that it has at least a lower value (M_{Min}) and/or has at most an upper value (M_{Max}).

11. The method as claimed in any one of the preceding claims,
- wherein, on the input side of the actuator speed controller (AGR), a limiter limits the target angular velocity (ω_{Target}) in such a way that it has at least a lower value (ω_{Min}) and/or has at most an upper value (ω_{Max}).

12. The method as claimed in any one of the preceding claims,
- wherein the holding is ended when a target clamping force (F_{Target}) or a target actuator position (X_{Target}) is changed.

13. The method as claimed in any one of the preceding claims,
- which is executed in response to an actual clamping force (F_{Actual}) exceeding an activation threshold value, differing from a target clamping force (F_{Target}) by at most a predefined threshold value, and being constant within a tolerance range at least for a predetermined period of time,
and/or
- which is executed in response to an actual position (X_{Actual}) exceeding a further activation threshold value, differing from a target position (X_{Target}) by at most a predefined threshold value and being constant within a tolerance range at least for a predetermined period of time.

14. An electrically actuated brake which has an electronic control device which is configured to carry out a method as claimed in any one of the preceding claims, wherein the brake has an electric actuator, the motor torque (M_{Act,Target}) of which is determined by means of an actuator speed controller (AGR) depending on a difference between a target angular velocity (ω_{Act,Target}) and an actual angular velocity (ω_{Act,Actual}), furthermore comprising an electric motor which is designed to press the brake shoes against the brake disc or against the brake drum of the brake.

## Revendications

1. Procédé de maintien d'un véhicule automobile en place au moyen d'un frein électrique,
dans lequel le frein présente un actionneur électrique dont le couple moteur (M_{Akt,Soll}) est déterminé au moyen d'un régulateur de vitesse de l'actionneur (AGR) en fonction d'une différence entre une vitesse angulaire de consigne (ω_{Akt,Soll}) et une vitesse angulaire réelle (ω_{Akt,Ist}), comprenant un moteur électrique conçu pour presser les sabots contre le disque de frein ou contre le tambour de frein du frein,
dans lequel le procédé présente les étapes :
- de serrage du frein jusqu'à atteindre une force cible,
- d'application d'une valeur prédéfinie négative (ω_{Akt,Soll,Red}) pour la vitesse angulaire de consigne (ω_{Akt,Soll}), tout en surveillant la vitesse angulaire réelle (ω_{Akt}) de l'actionneur,
- dès que la vitesse angulaire réelle (ω_{Akt}) dépasse, en valeur absolue, une valeur seuil, d'application d'une valeur au repos pour la vitesse angulaire de consigne (WAkt,Soll).

2. Procédé selon la revendication 1,
- dans lequel le régulateur de vitesse de l'actionneur (AGR) possède au moins une partie intégrale.

3. Procédé selon l'une des revendications précédentes,
- dans lequel le régulateur de vitesse de l'actionneur (AGR) est un régulateur proportionnel intégral.

4. Procédé selon l'une des revendications précédentes,
- dans lequel la valeur prédéfinie (ω_{Akt,Soll,Red}), en valeur absolue, est un maximum d'un tour par minute.

5. Procédé selon l'une des revendications précédentes,
- dans lequel la valeur au repos est nulle.

6. Procédé selon l'une des revendications précédentes,
- dans lequel la vitesse angulaire de consigne (ω_{Akt,Soll}) est la valeur prédéfinie (ω_{Akt,Soll,Red}) selon un état de fonctionnement ou provient d'un régulateur de force (KR).

7. Procédé selon l'une des revendications précédentes,
- dans lequel la vitesse angulaire de consigne (ω_{Akt,Soll}) est la valeur par prédéfinie (ω_{Akt,Soll,Red}) selon un état de fonctionnement ou provient d'un régulateur de position (PR).

8. Procédé selon l'une des revendications précédentes,
- dans lequel la vitesse angulaire de consigne (ω_{Akt,Soll}) est la valeur prédéfinie (ω_{Akt,Soll,Red}) selon un état de fonctionnement, et provient d'un régulateur de force (KR) ou provient d'un régulateur de position (PR).

9. Procédé selon l'une des revendications 6 à 8,
- dans lequel le régulateur de force (KR) et/ou le régulateur de position (PR) est un régulateur proportionnel.

10. Procédé selon l'une des revendications précédentes,
- dans lequel, du côté sortie du régulateur de vitesse de l'actionneur (AGR), un limiteur limite le couple moteur (M_{Akt,Soll}) de telle sorte qu'il présente au moins une valeur inférieure (M_{Min}) et/ou présente au plus une valeur supérieure (M_{Max}).

11. Procédé selon l'une des revendications précédentes,
- dans lequel, du côté entrée du régulateur de vitesse de l'actionneur (AGR), un limiteur limite la vitesse angulaire de consigne (ω_{Soll}) de telle sorte qu'elle présente au moins une valeur inférieure (ω_{Min}) et/ou présente au plus une valeur supérieure (ω_{Max}).

12. Procédé selon l'une des revendications précédentes,
- dans lequel le maintien est terminé lorsqu'une force de serrage de consigne (F_{Soll}) ou une position de l'actionneur de consigne (X_{Soll}) est modifiée.

13. Procédé selon l'une des revendications précédentes,
- lequel est exécuté lorsqu'une force de serrage réelle (F_{Ist}), au moins pour une période prédéterminée, dépasse une valeur seuil d'activation, s'écarte d'une force de serrage de consigne (F_{Soll}) d'au plus une valeur seuil prédéfinie et reste constante dans une plage de tolérance,
et/ou
- lequel est exécuté lorsqu'une position réelle (X_{Ist}), au moins pour une période prédéterminée, dépasse une valeur seuil d'activation supplémentaire, s'écarte d'une position de consigne (X_{Soll}) d'au plus une valeur seuil prédéfinie et reste constante dans une plage de tolérance.

14. Frein électrique, lequel présente un dispositif de commande électronique configuré pour exécuter un procédé selon l'une des revendications précédentes, dans lequel le frein présente un actionneur électrique dont le couple moteur (M_{Akt,Soll}) est déterminé au moyen d'un régulateur de vitesse de l'actionneur (AGR) en fonction d'une différence entre une vitesse angulaire de consigne (ω_{Akt,Soll}) et une vitesse angulaire réelle (ω_{Akt,Ist}), comprenant en outre un moteur électrique conçu pour appuyer les sabots de frein contre le disque de frein ou contre le tambour de frein du frein.
